# EUROPEAN PATENT SPECIFICATION

(11) **EP 2 613 482 B1**
(45) Date of publication and mention of the grant of the patent: **01.11.2017**
(21) Application number: 11821072.3
(22) Date of filing: 28.07.2011
(51) Int. Cl.: H04L 12/58

(54) **DEVICE, SYSTEM AND METHOD FOR CHANGING MULTI-USER RELATIONSHIP CHAIN**
VORRICHTUNG, SYSTEM UND VERFAHREN ZUR ÄNDERUNG EINER BEZIEHUNGSKETTE ZWISCHEN MEHREREN BENUTZERN
DISPOSITIF, SYSTÈME ET PROCÉDÉ POUR CHANGER UNE CHAÎNE DE RELATIONS MULTI-UTILISATEURS

(30) Priority: 31.08.2010 CN 201010271778
(43) Date of publication of application: 10.07.2013
(73) Proprietor: Tencent Technology (Shenzhen) Company Limited, Shenzhen, Guangdon 518044 (CN)
(72) Inventor: ZHANG, Li, Shenzhen Guangdong 518044 (CN)
(74) Representative: Awapatent AB
(86) International application number: PCT/CN2011/077711
(87) International publication number: WO 2012/028046

(56) References cited:
- CN-A- 101 071 478
- CN-A- 101 697 538
- US-A1- 2007 094 337
- US-A1- 2009 083 117
- US-A1- 2009 276 500
- US-B1- 7 685 236
- WEI-GUANG TENG ET AL: "Exploring information diffusion patterns with social relationships in the blogosphere", COGNITIVE INFORMATICS, 2009. ICCI '09. 8TH IEEE INTERNATIONAL CONFERENCE ON, IEEE, PISCATAWAY, NJ, USA, 15 June 2009 (2009-06-15), pages 422-427, XP031529019, ISBN: 978-1-4244-4642-1

## Description

### Field of the Invention

The present invention relates to computer technologies, and more particularly to a device, system and method for changing a multi-user relationship chain.

### Background of the Invention

Instant Messenger (IM) has become necessary communication tools in the diary life of most network users, and is widely applied to both entertainment and work of users. The IM provides a network identification (i.e., an identification number) for each user, so as to differentiate the user from other users. The user may chat with one buddy through the IM, or chat with multiple buddies through establishing a one-to-N group. The interaction performed between the user and buddies through the IM adopts a conversation mode, and thus the user may fluently communicate with the buddies. However, the efficiency of this conversation mode is very low, and a whole idea is usually unable to be obtained unless multiple conversations are performed.

With the development of Internet, Blog is widely applied as a new Internet conversation mode. Blog is a mode of publishing and posting articles by a Blogger on Internet through specific software, and thus is a mode of expressing ideas by the Blogger. The Blogger can express a full idea through Blog, the Blog is not for a specific object, and thus any user on Internet can browse the articles of the Blogger and leave word.

Micro-blog is a new network conversation mode widely applied in recent years. Micro-blog is also called Blog of a word, and is a network conversation mode through which a user expresses an idea with a word. Compared with the IM and Blog, the efficiency of transferring information through micro-blog is higher. Micro-blog is also not for a specific object, and thus is a one-to-one or one-to-N message chat mode, which means that a user may transfer messages to infinite users through micro-blog, and may receive messages transferred by infinite users through micro-blog.

However, the number of buddies which can be added by the user through the IM is limited, the user and buddies need to be validated with each other to establish a relationship, so the relationship chain is simple. In Blog, users may browse articles of Blogger and leave word without validation. However, the Blogger can only learn that which users follow the Blogger's articles and leave word for the articles, but can not follow these users. That is to say, the Blogger can not directly browse articles published by these users, but must obtain Blog websites of these users first, and then browse the articles of these users after entering the Blog spaces of these users. As can be seen, the relationship chain between users in Blog is also simple.

In a micro-blog application, a listening relationship may be established without validation between users. Moreover, in theory one user may face infinite users, and thus a broad relationship chain is needed. Through the relationship chain, a user may learn, during a micro-blog using procedure, that how many users and which users listen to the user, and may listen to these users randomly. However, IM's validation notifying mechanism for establishing a buddy relationship is inapplicable to the loose coupling relationship chain such as micro-blog. The relationship chain providing mechanism in Blog is too simple, and thus it is needed to provide a mechanism for effectively changing a user relationship chain, so as to guarantee that the user can learn, during the micro-blog using procedure, that how many users and how many new users listen to the user, and guarantee that the user can rapidly view that which users and which new users listen to the user, and further determine whether to listen to these users according to a viewing result.

US 2009/276500 A1 discloses that a first Short Message (SM) is sent from Broadcaster's unit to Follower's unit directly. The SMS software links the two users' unique IDs to the SM, leaves a copy of the SM with a unique ID link on the each of the Broadcaster's unit and Follower's unit, and enters the other unit's unique ID onto a list of 'current contacts' for that unit

US 2007/094337 A1 discloses that a generic IM device/server protocol permits a single implementation of an IM application on client devices for communicating with different enterprise IM servers types. The protocol defines a server maintained tap to identify the currency of a contact list it is managing for a client device. The client device receives and persists the tag and provides it at login. The server automatically sends a contact list update only if the tag indicates the client deices contact list instance is not current. Presence updates may also be sent automatically at login and the client device need not separately request contact list or presence update at login.

### Summary of the Invention

Embodiments of the present invention provide a device, system and method for changing a multi-user relationship chain, so as to guarantee that a user can learn, during a micro-blog using procedure, that how many users and how many new users listen to the user, and guarantee that the user can rapidly view that which users and which new users listen to the user, and further determine whether to listen to these users according to a viewing result.

The technical solution of the embodiments is implemented as follows.

A client device for changing a multi-user relationship chain includes a push information managing module, a relationship chain managing module and a relationship chain prompting module, where
the push information managing module is configured to receive a listening notification signaling from a micro-blog relationship chain server, obtain a Unique Identification Number (UIN) of a new listener contained in the listening notification signaling, and send the UIN of the new listener to the relationship chain managing module;
the relationship chain managing module is configured to receive the UIN of the new listener sent by the push information managing module, add the UIN of the new listener into a listener list, label the UIN of the new listener with a new listener identification "New", and notify the relationship chain prompting module that the new listener listens to a user; and
the relationship chain prompting module is configured to receive the notification from the relationship chain managing module, and after determining that the notification indicates that the relationship chain changes, create an indication identification to prompt the user that the new listener listens to the user;
the client device further includes a listener list managing module; wherein
the relationship chain prompting module is further configured to monitor a triggering message for learning detailed information of the new listener, and notify the listener list managing module; and
the listener list managing module is configured to, after receiving the notification from the relationship chain prompting module obtain the listener list from the relationship chain managing module, and display the listener list to the user; when there is one listener in the listener list, display the UIN and recently published micro-blog of the listener to the user; if there are multiple listeners in the listener list, display the UINs of the multiple listeners to the user according to an order that the multiple listeners listen to the user, wherein new listeners are labeled with a new listener identification.

A system for changing a multi-user relationship chain includes a client device as mentioned above and a micro-blog relationship chain server.

A method for changing a multi-user relationship chain includes:
receiving, by a client device, a listening notification signaling from a micro-blog relationship chain server, wherein the listening notification signaling contains a Unique Identification Number (UIN) of a new listener; and
obtaining, by the client device, the UIN of the new listener contained in the listening notification signaling, adding the UIN of the new listener into a listener list, labeling the UIN of the new listener with a new listener identification "New", and creating an indication identification to prompt a user that the new listener listens to the user;
monitoring, by the client device, a triggering message for learning detailed information of the new listener, and displaying the listener list to the user;
when there is one listener in the listener list, displaying, by the client device, the UIN and recently published micro-blog of the listener to the user; if there are multiple listeners in the listener list, displaying the UINs of the multiple listeners to the user according to an order that the multiple listeners listen to the user, wherein new listeners are labeled with a new listener identification.

As can be seen from the above technical solution, according to the device, system and method for changing the multi-user relationship chain, the user may receive, during a micro-blog using procedure, the notification indicating that the relationship chain changes, and view the up to date change of the relationship chain, so as to conveniently view that how many listeners and how many new listeners listen to the user, and view that which listeners and which new listeners listen to the user.

### Brief Description of the Drawings

Figure 1 is a schematic diagram illustrating a system for changing a multi-user relationship chain according to an embodiment of the present invention.
Figure 2 is a schematic diagram illustrating a device for changing a multi-user relationship chain according to an embodiment of the present invention.
Figure 3 is a schematic diagram illustrating a device for changing a multi-user relationship chain according to another embodiment of the present invention.
Figure 4 is a schematic diagram illustrating a prompting interface of newly added listener according to an embodiment of the present invention.
Figure 5 is a schematic diagram illustrating a prompting interface of newly added listener according to another embodiment of the present invention.
Figure 6 is a flowchart illustrating a method for changing a multi-user relationship chain according to an embodiment of the present invention.
Figure 7 is a flowchart illustrating a method for changing a multi-user relationship chain according to another embodiment of the present invention.

### Detailed Description of the Invention

In order to make the object, technical solution and merits of the present invention clearer, the embodiments of the present invention will be illustrated in detail hereinafter with reference to the accompanying drawings. Obviously, the described embodiments are only partial embodiments of the present invention, but are not all embodiments. The present invention may be represented as different forms, and thus is not limited to the described embodiments. According to the embodiments of the present invention, those skilled in the art can obtain other embodiments without creative labor.

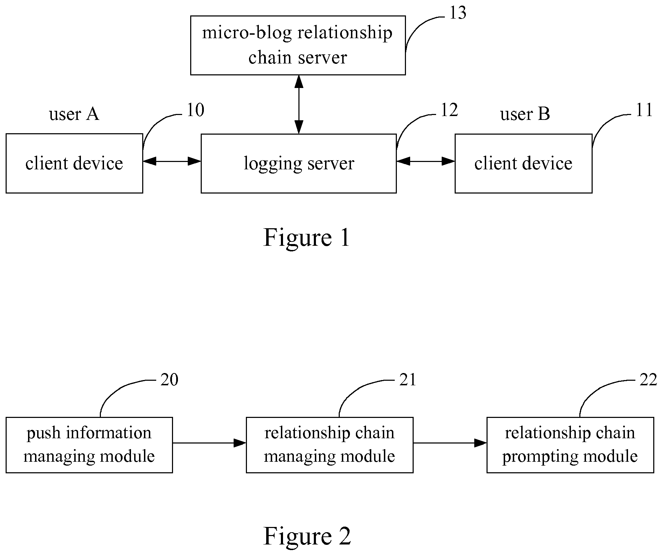

Figure 1 is a schematic diagram illustrating a system for changing a multi-user relationship chain according to an embodiment of the present invention. As shown in Figure 1, the system includes: a client device 10 of user A, a client device 11 of user B, a logging server 12 and a micro-blog relationship chain server 13.

The user A sends an identification number and password of the user A to the logging server 12 through the client device 10. After the user A passes verification, a network connection channel is established between the client device 10 and the logging server 12, and the client device 10 sends a heartbeat packet to the logging server 12 periodically to ensure the connection between the client device 10 and the logging server 12. After the user A logs on the logging server 12 through the client device 10, the client device 10 creates a micro-blog panel managing module, and the user A may publish micro-blog or listen to micro-blog of other users through the created micro-blog panel managing module.

Similarly, the user B sends an identification number and password of the user B to the logging server 12 through the client device 11. After the user B passes verification, a network connection channel is established between the client device 11 and the logging server 12, and the client device 11 sends a heartbeat packet to the logging server 12 periodically to ensure the connection between the client device 11 and the logging server 12. After the user B logs on the logging server 12 through the client device 11, the client device 11 creates a micro-blog panel managing module, and the user B may publish micro-blog or listen to micro-blog of other users through the created micro-blog panel managing module.

In this embodiment, when the user B intends to listen to the user A after logging on the logging server 12 through the client device 11, the user B sends a listening request signaling to the logging server 12 through the client device 11, where the listening request signaling includes a listener, i.e., a Unique Identification Number (UIN) of the user B, a user to be listened, i.e., a UIN of the user A and a signaling command number for indicating the signaling type. After receiving the listening request signaling, the logging server 12 determines, according to the signaling command number, that the listening request signaling is a signaling of micro-blog type, and forwards the listening request signaling to the micro-blog relationship chain server 13. After receiving the listening request signaling, the micro-blog relationship chain server 13 obtains UINs of the user A and user B from the listening request signaling, sets a listening relationship between the user A and the user B, i.e., adds the user B into a listener list of the user A, and stores the listener list.

In this embodiment, since it is possible that a listener listens to the user A when the user A is not online, the micro-blog relationship chain server 13 updates the stored listener list in real time. Every time the user A logs on the logging server 12 through the client device 10, the user A first obtains the listener list stored by the micro-blog relationship chain server 13, so as to ensure that the listener list displayed to the user A is up to date. After the user A obtains the listener list, if a new listener listens to the user A, the micro-blog relationship chain server 13 modifies the stored listener list, and issues, according to the IP address and port number of client device 10 of user A, a listening notification signaling to the client device 10 of the user A through the logging server 12. The UIN of the new listener is carried in the listening notification signaling and issued to the client device 10. After receiving the listening notification signaling, the client device 10 of the user A obtains the UIN of the new listener, modifies the obtained listener list, adds the UIN of the new listener into the listener list, labels the UIN of the new listener with a new listener identification "New", and displays the listener list to the user A on demand. Further, the number of listeners listening to the user A and the number of new listeners listening to the user A may be labeled in the listener list. In this way, the user A may learn, through viewing the listener list, that how many listeners listen to the user A and which listeners are new listeners, and may determine whether to select a certain listener to listen to the micro-blog of the listener.

Figure 1 only shows two users, and the two users use the same logging server together. But, those skilled in the art can understand that, there may be multiple users in other embodiments and the multiple users may log on different logging servers.

In the embodiment, the user may receive, during a micro-blog using procedure, the notification indicating that the relationship chain changes, views the up to date change of the relationship chain through the listener list, so as to conveniently view that how many listeners listen to the user and how many new listeners listen to the user, and views that which listeners and which new listeners listen to the user. Further, if the user intends to obtain detailed information of a certain listener, the user may trigger a function control corresponding to the listener. In this way, the client device may obtain the identification information and individual materials of the listener from the logging server, and displays the identification information and individual materials of the listener to the user.

Figure 2 is a schematic diagram illustrating a device for changing a multi-user relationship chain according to an embodiment of the present invention. As shown in Figure 2, the device includes a push information managing module 20, a relationship chain managing module 21 and a relationship chain prompting module 22.

The push information managing module 20 is configured to receive a listening notification signaling pushed by a micro-blog relationship chain server, obtain an UIN of a new listener contained in the listening notification signaling, and send the UIN of the new listener to the relationship chain managing module 21.

The relationship chain managing module 21 is configured to receive the UIN of the new listener sent by the push information managing module 20, add the UIN of the new listener into a listener list, and notify the relationship chain prompting module 22 that the new listener listens to the user.

The relationship chain prompting module 22 is configured to receive the notification from the relationship chain managing module 21, and after determining that the notification indicates that the relationship chain changes, and create an indication identification on a micro-blog panel managing module of the client device to prompt the user that the new listener listens to the user.

In this embodiment, the device may be configured on an IM client device, or may be configured separately. As shown in Figure 1, the device may be configured on the client device of the user A and the client device of the user B; or, the device is configured separately and connected with the client devices shown in Figure 1 and the micro-blog relationship chain server respectively. That is to say, the device is connected with the micro-blog relationship chain server and the client device of the user A respectively, and is connected with the micro-blog relationship chain server and the client device of the user B.

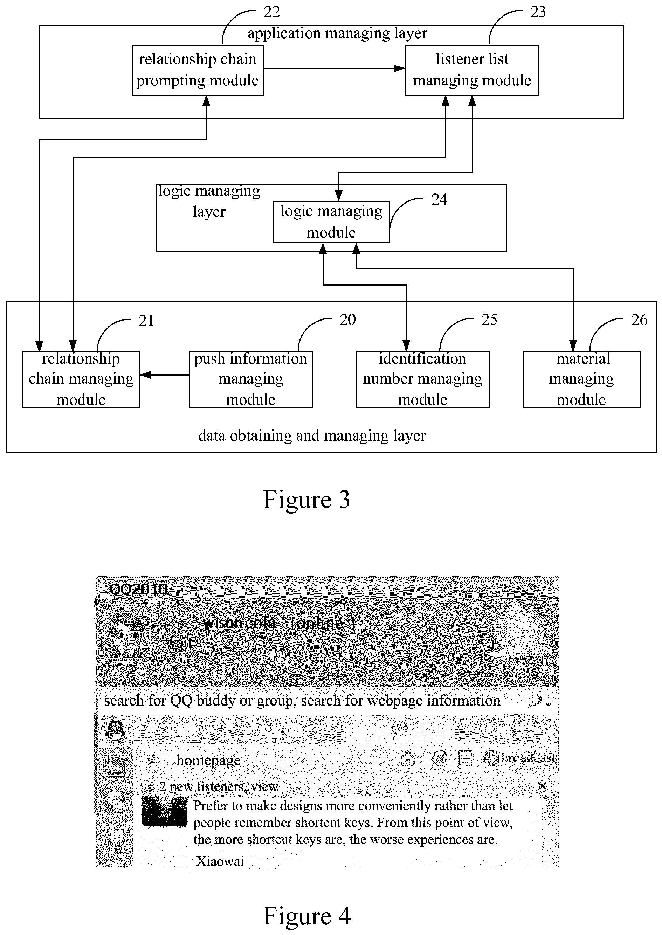

Figure 3 is a schematic diagram illustrating a device for changing a multi-user relationship chain according to another embodiment of the present invention. The device may be divided into three layers based on a logic structure, which include a data obtaining and managing layer, a logic managing layer and an application managing layer. The data obtaining and managing layer is configured to manage identification information and individual materials of user, a listener list and data pushed by the micro-blog relationship chain server. Further, if the device is configured separately, the identification information of the user includes a nickname, a sign bit and so on. If the device is configured on the IM client device and the identification number of the IM client device is different from the UIN of the user, and the identification information of the user may further include the identification number of the IM client device. If the identification number of the IM client device is the same as the UIN of the user, the identification information of the user may not include the identification number of the IM client device. The individual materials of the user include sex and age of the user. The logic managing layer is configured to process various original data provided by the data obtaining and managing layer, for example, bundle the UINs in the listener list with the identification information and individual materials of each listener respectively, so as to obtain the whole information of each listener and provide the whole information to the application managing layer. The application managing layer is configured to display the listener list and related information of listeners to the user, create and manage various function controls for performing operations by the user, e.g., a relationship chain change prompting control, a listener list displaying control and so on.

Specifically, the device for changing a multi-user relationship chain shown in Figure 3 includes the push information managing module 20, the relationship chain managing module 21 and the relationship chain prompting module 22 shown in Figure 2, and further includes a listener list managing module 23, a logic managing module 24, an identification number managing module 25 and a material managing module 26.

The push information managing module 20, the relationship chain managing module 21, the identification number managing module 25 and the material managing module 26 belong to the data obtaining and managing layer, the relationship chain prompting module 22 and the listener list managing module 23 belong to the logic managing layer, and the logic managing module 24 belongs to the application managing layer.

Those skilled in the art can understand that the device shown in Figure 3 is only an example, and can not be used to limit the protection scope of the present invention. There may be various modification, equivalent substitution and improvement of the device. For example, some modules may be extended and/or integrated, and other modules may be added into the device. The functions of all modules of the device will be illustrated in detail hereinafter.

The push information managing module 20 is configured to receive a listening notification signaling pushed by the micro-blog relationship chain server, obtain an UIN of a new listener contained in the listening notification signaling, and send the UIN of the new listener to the relationship chain managing module 21. Specifically, after the device obtains the listener list from the micro-blog relationship chain server, if a new listener listens to the user using the device, the micro-blog relationship chain server automatically sends the listening notification signaling containing the UIN of the new listener to the push information managing module 20, and then the push information managing module 20 obtains the UIN of the new listener and sends the UIN of the new listener to the relationship chain managing module 21.

The relationship chain managing module 21 is configured to obtain the listener list stored by the micro-blog relationship chain server after the user logs on the logging server, receive the UIN of the new listener sent by the push information managing module 20, add the UIN of the new listener into the listener list, label the UIN of the new listener with a new listener identification "New", notify, through an event notification mode, the relationship chain prompting module 22 that the new listener listens to the user, and provide the listener list to the listener list managing module 23 on demand. The relationship chain managing module 21 is further configured to record in the listener list that how many listeners listen to the user and how many new listeners listen to the user.

The relationship chain prompting module 22 is configured to receive the notification from the relationship chain managing module 21, and after determining that the notification indicates that the relationship chain changes, and create an indication identification on the micro-blog panel managing module to prompt the user, for instance, create a general yellow strip to prompt the user. The relationship chain prompting module 22 is further configured to monitor a triggering message of the user, for instance, a mouse clicking message, and if it is confirmed that the user intends to view a new listener, notify the listener list managing module 23 to display the listener list to the user.

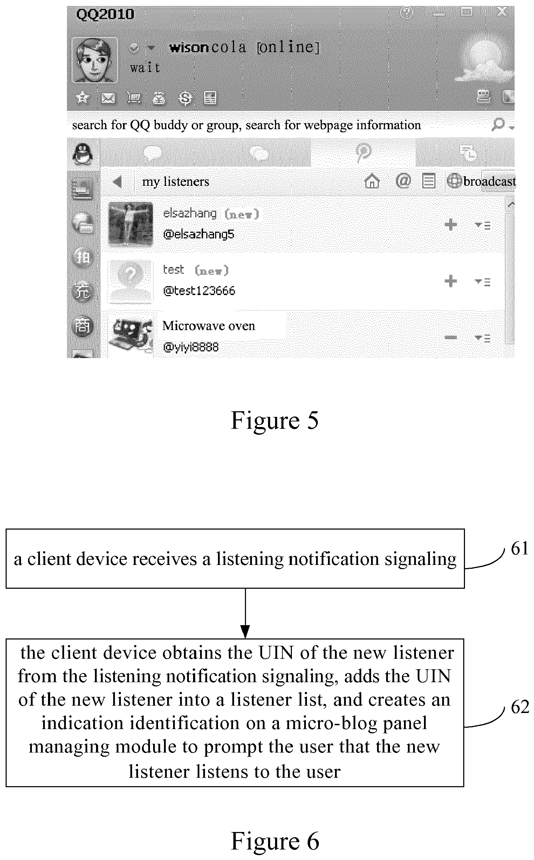

The listener list managing module 23 is configured to, after receiving the notification from the relationship chain prompting module 22, obtain the listener list from the relationship chain managing module 21, and display the listener list to the user. In this embodiment, if there is only one listener in the listener list, the listener list managing module 23 displays the UIN and recently published micro-blog of the listener to the user. As shown in Figure 4, if there are multiple listeners in the listener list, the listener list managing module 23 displays the UINs of the multiple listeners to the user according to an order that the multiple listeners listen to the user, where new listeners are labeled with a new listener identification "New", as shown in Figure 5. In this embodiment, the listener list managing module 23 is further configured to, when the user wants to learn the detailed information of a certain listener and triggers a function control corresponding to the listener, send the UIN of the listener to the logic managing module 24, and obtain the identification information and individual materials of the listener through the logic managing module 24, and display the identification information and individual materials of the listener to the user.

In this embodiment, if the user intends to listen to the micro-blog of a certain listener, the user may locate a guest page corresponding to the listener through triggering a page control corresponding to the listener. The guest page refers to the micro-blog space of the listener. Since the listener is a guest of the user, the micro-blog space of the listener is called as the guest page of the user. In the guest page, the user may view all micro-blogs published by the listener, all comments published by other users for these micro-blogs, users listened by the listener and users which have listened to the listener, and may publish comments for the micro-blogs of the listener.

The logic managing module 24 is configured to send an obtaining instruction to the identification number managing module 25 and the material managing module 26 according to the UIN of the listener sent by the listener list managing module 23, obtain the identification information and individual material of the listener, process the various original data of the listener, for instance, bundle the UIN of the listener with the identification information and individual material of the listener so as to obtain the whole information of the listener, and provide the whole information of the listener to the listener list managing module 23.

The identification number managing module 25 is configured to obtain the identification information of the listener from the logging server after receiving an obtaining instruction of the logic managing module 24, and send the obtained identification information to the logic managing module 24.

The material managing module 26 is configured to obtain the individual materials of the listener from the logging server after receiving an obtaining instruction of the logic managing module 24, and send the obtained individual materials to the logic managing module 24.

The device for changing a multi-user relationship chain described by this embodiment may be configured on an IM client device, and may also be configured separately.

Figure 6 is a flowchart illustrating a method for changing a multi-user relationship chain according to an embodiment of the present invention. As shown in Figure 6, the method includes following processes.

Block 61, a client device receives a listening notification signaling, where the listening notification signaling contains a UIN of a new listener.

Block 602, the client device obtains the UIN of the new listener from the listening notification signaling, adds the UIN of the new listener into a listener list, and creates an indication identification on a micro-blog panel managing module to prompt the user that the new listener listens to the user.

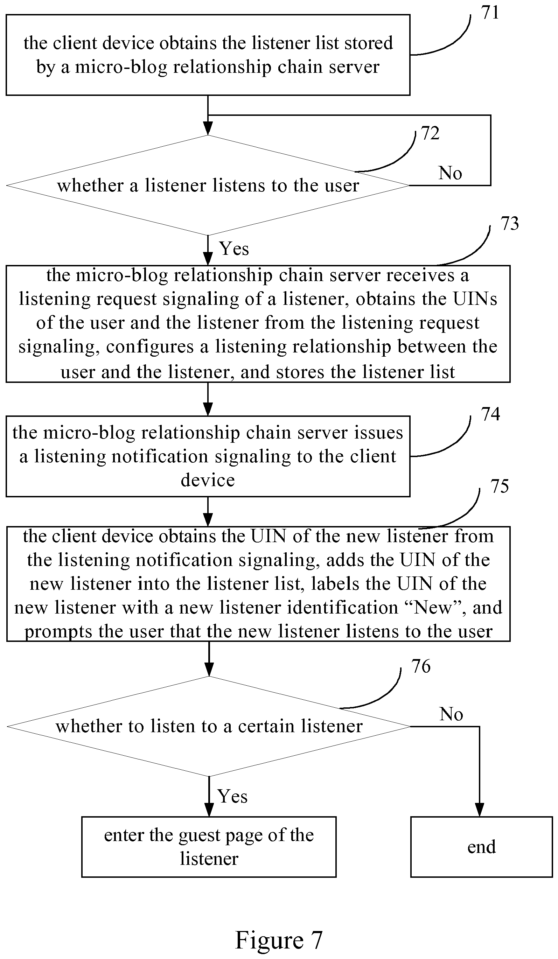

Figure 7 is a flowchart illustrating a method for changing a multi-user relationship chain according to another example of the present invention.

Block 71, after the user logs on a logging server through the client device, the client device obtains the listener list stored by a micro-blog relationship chain server.

Since it is possible that a listener listens to the micro-blog of the user when the user is not online, the micro-blog relationship chain server updates the stored listener list in real time. In this way, every time the user logs on the logging server, the client device first obtain the listener list stored by the micro-blog relationship chain server, so as to ensure that the listener list displayed to the user is up to date.

Block 72, the micro-blog relationship chain server determines whether a listener listens to the user; if yes, block 73 is performed; otherwise, block 72 is performed again.

Block 73, the micro-blog relationship chain server receives a listening request signaling of a listener, obtains the UINs of the user and the listener from the listening request signaling, configures a listening relationship between the user and the listener, i.e., adds the listener into the listener list of the user, and stores the listener list.

Block 74, the micro-blog relationship chain server issues a listening notification signaling to the client device, where the listening notification signaling contains the UIN of the new listener.

Block 75, after receiving the listening notification signaling, the client device obtains the UIN of the new listener from the listening notification signaling, adds the UIN of the new listener into the listener list, labels the UIN of the new listener with a new listener identification "New", and prompts the user that the new listener listens to the user. In this process, the client device may record in the listener list that how many listeners listen to the user and how many new listeners listen to the user.

Block 76, through the client device, the user determines whether to listen to a certain listener; if yes, the user enters the guest page of the listener; otherwise, the procedure terminates.

As can be seen from the above embodiments, according to the device, system and method for changing the multi-user relationship chain, the user may receive, during a micro-blog using procedure, the notification indicating that the relationship chain changes, and view the up to date change of the relationship chain, so as to conveniently view that how many listeners and how many new listeners listen to the user, and view that which listeners and which new listeners listen to the user. Further, if the user intends to obtain the detailed information of a certain listener, the user may trigger a function control corresponding to the listener. In this way, the client device may obtain the identification information and individual materials of the listener and display the identification information and individual materials of the listener to the user.

It should be understood that, the foregoing is only partial embodiments of the present invention and is not used to limit the present invention. Based on the embodiments of the present invention, those skilled in the art may obtain other embodiments through modification, equivalent substitution and improvement without creative labor.

## Claims

1. A client device for changing a multi-user relationship chain, comprising: a push information managing module (20), a relationship chain managing module (21) and a relationship chain prompting module (22),
the push information managing module (20) is configured to receive a listening notification signaling from a micro-blog relationship chain server,
**characterized in that** the push information managing module (20) is further configured to obtain a Unique Identification Number (UIN) of a new listener contained in the listening notification signaling, and send the UIN of the new listener to the relationship chain managing module (21);
the relationship chain managing module (21) is configured to receive the UIN of the new listener sent by the push information managing module (20), add the UIN of the new listener into a listener list, label the UIN of the new listener with a new listener identification "New", and notify the relationship chain prompting module (22) that the new listener listens to a user; and
the relationship chain prompting module (22) is configured to receive the notification from the relationship chain managing module (21), and after determining that the notification indicates that the relationship chain changes, create an indication identification to prompt the user that the new listener listens to the user;
the client device further comprises a listener list managing module (23); wherein
the relationship chain prompting module (22) is further configured to monitor a triggering message for learning detailed information of the new listener, and notify the listener list managing module (23); and
the listener list managing module (23) is configured to, after receiving the notification from the relationship chain prompting module (22), obtain the listener list from the relationship chain managing module (21), and display the listener list to the user; when there is one listener in the listener list, display the UIN and recently published micro-blog of the listener to the user; if there are multiple listeners in the listener list, display the UINs of the multiple listeners to the user according to an order that the multiple listeners listen to the user, wherein new listeners are labeled with a new listener identification.

2. The client device of claim 1, wherein the relationship chain managing module (21) is further configured to obtain the listener list stored by a micro-blog relationship chain server after the user logs on a logging server.

3. The client device of claim 1, further comprising a logic managing module (24); wherein
the listener list managing module (23) is further configured to, when the user intends to learn the detailed information of a listener and triggers a function control corresponding to the listener, send the UIN of the listener to the logic managing module (24), and receive the whole information of the listener from the logic managing module (24), and display the whole information of the listener to the user; and
the logic managing module (24) is configured to obtain the identification information and individual material of the listener according to the UIN of the listener sent by the listener list managing module (23), bundle the UIN of the listener with the identification information and individual material of the listener, obtain the whole information of the listener and provide the whole information of the listener to the listener list managing module (23).

4. The client device of claim 3, further comprising an identification number managing module (25) and a material managing module (26); wherein
the identification number managing module (25) is configured to obtain the identification information of the listener from a logging server after receiving an obtaining instruction of the logic managing module (24), and send the obtained identification information to the logic managing module (24); and
the material managing module (26) is configured to obtain the individual materials of the listener from the logging server after receiving an obtaining instruction of the logic managing module (24), and send the obtained individual materials to the logic managing module (24).

5. The client device of any of claims 1 to 4, further comprising a page control corresponding to a listener, configured to, when the user intends to listen to the listener, locate the guest page of the listener for the user.

6. A system for changing a multi-user relationship chain, comprising a client device (10/11) as claimed in any of claims 1 to 5 and a micro-blog relationship chain server (13).

7. A method for changing a multi-user relationship chain, comprising:
receiving (61), by a client device, a listening notification signaling from a micro-blog relationship chain server, **characterized in that** the listening notification signaling contains a Unique Identification Number (UIN) of a new listener; and the method further comprises:
obtaining (62), by the client device, the UIN of the new listener contained in the listening notification signaling, adding the UIN of the new listener into a listener list, labeling the UIN of the new listener with a new listener identification "New", and creating an indication identification to prompt a user that the new listener listens to the user;
monitoring, by the client device, a triggering message for learning detailed information of the new listener, and displaying the listener list to the user;
when there is one listener in the listener list, displaying, by the client device, the UIN and recently published micro-blog of the listener to the user; if there are multiple listeners in the listener list, displaying the UINs of the multiple listeners to the user according to an order that the multiple listeners listen to the user, wherein new listeners are labeled with a new listener identification.

8. The method of claim 7, further comprising:
when the user intends to learn detailed information of a listener and triggers a function control corresponding to the listener, obtaining, by the client device, the identification information and individual material of the listener according to the UIN of the listener, bundling the UIN of the listener with the identification information and individual material of the listener, obtaining whole information of the listener and displaying the whole information of the listener to the user.

9. The method of any of claims 7 to 8, further comprising:
when the user intends to listen to a listener, locating the guest page of the listener for the user.

10. The method of claim 7, further comprising:
receiving, by a micro-blog relationship chain server, a listening request signaling of a listener, obtaining the UINs of the listener and the user, adding the listener into the listener list of the user, and storing the listener list.

## Patentansprüche

1. Client-Vorrichtung zum Ändern einer Beziehungskette zwischen mehreren Benutzern, umfassend: ein Push-Informationsmanagementmodul (20), ein Beziehungsketten-Managementmodul (21) und ein Beziehungsketten-Vermittlungsmodul (22),
wobei das Push-Informationsmanagementmodul (20) konfiguriert ist, um eine Zuhörbekanntgabesignalisierung von einem Mikroblog-Beziehungskettenserver zu empfangen,
**dadurch gekennzeichnet, dass** das Push-Informationsmanagementmodul (20) ferner konfiguriert ist, um eine eindeutige Identifikationsnummer (Unique Identification Number - UIN) eines neuen Zuhörers zu erzielen, die in der Zuhörbekanntgabesignalisierung enthalten ist, und die UIN des neuen Zuhörers zu dem Beziehungsketten-Managementmodul (21) zu senden;
wobei das Beziehungsketten-Managementmodul (21) konfiguriert ist, um die UIN des neuen Zuhörers, die von dem Push-Informationsmanagementmodul (20) gesendet wird, zu empfangen, die UIN des neuen Zuhörers zu einer Zuhörerliste hinzuzufügen, die UIN des neuen Zuhörers mit einer Identifikation "Neu" für einen neuen Zuhörer zu bezeichnen und dem dem Beziehungsketten-Vermittlungsmodul (22) bekanntzugeben, dass der neue Zuhörer einem Benutzer zuhört; und
das Beziehungsketten-Vermittlungsmodul (22) konfiguriert ist, um die Bekanntgabe von dem Beziehungsketten-Managementmodul (21) zu empfangen und, nachdem es bestimmt hat, dass die Bekanntgabe angibt, dass sich die Beziehungskette ändert, eine Anzeigeidentifikation zu schaffen, um dem Benutzer zu vermitteln, dass der neue Zuhörer dem Benutzer zuhört;
wobei die Client-Vorrichtung ferner ein Zuhörerlisten-Managementmodul (23) umfasst; wobei
das Beziehungsketten-Vermittlungsmodul (22) ferner konfiguriert ist, um eine Auslösenachricht zum Lernen ausführlicher Informationen des neuen Zuhörers auszulösen und das Zuhörerlisten-Managementmodul (23) zu informieren; und
das Zuhörerlisten-Managementmodul (23) konfiguriert ist, um nach dem Empfangen der Bekanntgabe von dem Beziehungsketten-Vermittlungsmodul (22), die Zuhörerliste von dem Beziehungsketten-Managementmodul (21) zu erzielen und die Zuhörerliste für den Benutzer anzuzeigen; wenn es einen Zuhörer in der Zuhörerliste gibt, die UIN und den kürzlich veröffentlichten Mikroblog der Zuhörer für den Benutzer anzuzeigen; falls es mehrere Zuhörer in der Zuhörerliste gibt, die UINs der mehreren Zuhörer für den Benutzer gemäß einer Reihenfolge, in der die mehreren Zuhörer dem Benutzer zuhören, anzuzeigen, wobei die neuen Zuhörer mit einer neuen Zuhöreridentifikation bezeichnet werden.

2. Client-Vorrichtung nach Anspruch 1, wobei das Beziehungsketten-Managementmodul (21) ferner konfiguriert ist, um die Zuhörerliste zu erzielen, die durch einen Mikroblog-Beziehungskettenserver gespeichert wird, nachdem sich der Benutzer auf einem Loggingserver angemeldet hat.

3. Client-Vorrichtung nach Anspruch 1, die ferner ein Logikmanagementmodul (24) umfasst, wobei das Zuhörerlisten-Managementmodul (23) ferner konfiguriert ist, um, wenn der Benutzer beabsichtigt, die ausführlichen Informationen eines Zuhörers zu lernen und eine Funktionssteuerung, die dem Zuhörer entspricht, auslöst, die UIN des Zuhörers zu dem Logikmanagementmodul (24 zu senden und die vollständigen Informationen des Zuhörers von dem Logikmanagementmodul (24) zu empfangen und die vollständigen Informationen des Zuhörers für den Benutzer anzuzeigen; und
das Logikmanagementmodul (24) konfiguriert ist, um die Identifikationsinformationen und individuelles Material des Zuhörers gemäß der UIN des Zuhörers, die von dem Zuhörerlisten-Managementmodul (23) gesendet werden, zu erzielen, die UIN des mit den Identifikationsinformationen und individuellem Material des Zuhörers zu bündeln, die vollständigen Informationen des Zuhörers zu erzielen und die vollständigen Informationen des Zuhörers zu dem Zuhörerlisten-Managementmodul (23) bereitzustellen.

4. Vorrichtung nach Anspruch 3, die ferner ein Identifikationsnummer-Managementmodul (25) und ein Materialmanagementmodul (26) umfasst, wobei
das Identifikationsnummer-Managementmodul (25) konfiguriert ist, um die Identifikationsinformationen des Zuhörers aus einem Loggingserver zu erzielen, nachdem eine Erzielungsanweisung des Logikmanagementmoduls (24) empfangen wurde, und die erzielten Identifikationsinformationen zu dem Logikmanagementmodul (24) zu senden; und
das Materialmanagementmodul (26) konfiguriert ist, um die individuellen Materialien des Zuhörers von dem Loggingserver zu erzielen, nachdem eine Erzielungsanweisung des Logikmanagementmoduls (24) empfangen wurde, und die erzielten individuellen Materialien zu dem Logikmanagementmodul (24) zu senden.

5. Client-Vorrichtung nach einem der Ansprüche 1 bis 4, die ferner eine Seitensteuerung umfasst, die einem Zuhörer entspricht, die konfiguriert ist, um, wenn der Benutzer beabsichtigt, dem Zuhörer zuzuhören, die Gastseite des Zuhörers für den Benutzer zu lokalisieren.

6. System zum Ändern einer Beziehungskette zwischen mehreren Benutzern, das eine Client-Vorrichtung (10/11) nach einem der Ansprüche 1 bis 5 und einen Mikroblog-Beziehungskettenserver (13) umfasst.

7. Verfahren zum Ändern einer Beziehungskette zwischen mehreren Benutzern, umfassend:
Empfangen (61) durch eine Client-Vorrichtung einer Zuhörbekanntgabesignalisierung von einem Mikroblog-Beziehungskettenserver, **dadurch gekennzeichnet, dass** die Zuhörbekanntgabe eine eindeutige Identifikationsnummer (Unique Identification Number - UIN) eines neuen Zuhörers enthält, und das Verfahren ferner umfasst:
Erzielen (62) durch die Client-Vorrichtung, der UIN des neuen Zuhörers, die in der Zuhörbekanntgabesignalisierung enthalten ist, Hinzufügen der UIN des neuen Zuhörers zu einer Zuhörerliste, Bezeichnen der UIN des neuen Zuhörers mit einer neuen Zuhöreridentifikation "Neu", und Anlegen einer Anzeigeidentifikation, um einem Benutzer zu vermitteln, dass der neue Zuhörer dem Benutzer zuhört;
Überwachen durch die Client-Vorrichtung einer Auslösenachricht zum Lernen ausführlicher Informationen des neuen Benutzers und Anzeigen der Zuhörerliste für den Benutzer;
wenn es einen Zuhörer in der Zuhörerliste gibt, Anzeigen durch die Client-Vorrichtung der UIN und des kürzlich veröffentlichten Mikroblogs des Zuhörers für den Benutzer; falls es mehrere Zuhörer in der Zuhörerliste gibt, Anzeigen der UINs der mehreren Zuhörer für den Benutzer gemäß einer Reihenfolge, in der die mehreren Zuhörer dem Benutzer zuhören, wobei neue Zuhörer mit einer neuen Zuhöreridentifikation bezeichnet werden.

8. Verfahren nach Anspruch 7, ferner umfassend:
wenn der Benutzer beabsichtigt, ausführliche Informationen eines Zuhörers zu lernen und eine Funktionssteuerung auslöst, die dem Zuhörer entspricht, Erzielen durch die Client-Vorrichtung der Identifikationsinformationen und des individuellen Materials des Zuhörers gemäß der UIN des Zuhörers, Bündeln der UIN des Zuhörers mit den Identifikationsinformationen und dem individuellen Material des Zuhörers, Erzielen vollständiger Informationen des Zuhörers und Anzeigen der vollständigen Informationen des Zuhörers für den Benutzer.

9. Verfahren nach einem der Ansprüche 7 bis 8, ferner umfassend:
wenn der Benutzer beabsichtigt, einem Zuhörer zuzuhören, Lokalisieren der Gastseite des Zuhörers für den Benutzer.

10. Verfahren nach Anspruch 7, ferner umfassend:
durch einen Mikroblog-Beziehungskettenserver Empfangen einer Zuhöranfragesignalisierung eines Zuhörers, Erzielen der UINs des Zuhörers und des Benutzers, Hinzufügen des Zuhörers zu der Zuhörerliste des Benutzers und Speichern der Zuhörerliste.

## Revendications

1. Dispositif client pour changer une chaîne de relations multi utilisateurs, comprenant : un module de gestion d'information de poussée (20), un module de gestion de chaînes de relations (21) et un module d'indication de chaînes de relations (22),
le module de gestion d'information de poussée (20) est configurée pour recevoir une signalisation de notification d'écoute provenant d'un serveur de chaînes de relations de micro blog,
**caractérisé en ce que** le module de gestion d'information de poussée (20) est en outre configuré pour obtenir un numéro d'identification unique (UIN) d'un nouvel auditeur contenu dans la signalisation de notification d'écoute et envoyer l'UIN du nouvel auditeur au module de gestion de chaînes de relations (21);
le module de gestion de chaînes de relations (21) est configuré pour recevoir l'UIN du nouvel auditeur envoyé par le module de gestion d'information de poussée (20), ajouter l'UIN du nouvel auditeur dans une liste d'auditeurs, étiqueter l'UIN du nouvel auditeur avec une nouvelle identification d'auditeur "Nouveau" et notifier au module d'indication de chaînes de relations (22) que le nouvel auditeur écoute un utilisateur; et
le module d'indication de chaînes de relations (22) est configuré pour recevoir la notification provenant du module de gestion de chaînes de relations (22) et après avoir déterminé que la notification indique que la chaîne de relations change, créer une identification d'indications pour indiquer à l'utilisateur que le nouvel auditeur écoute l'utilisateur;
le dispositif client comprend en outre un module de gestion de liste d'auditeurs (23); dans lequel
le module d'incitation de chaînes de relations (22) est en outre configuré pour surveiller un message de déclenchement pour apprendre une information détaillée du nouvel auditeur et notifier au module de gestion de liste d'auditeurs (23); et
le module de gestion de liste d'auditeurs (23) est configuré pour, après avoir reçu la notification provenant du module d'indication de chaînes de relations (22), obtenir la liste d'auditeurs provenant du module de gestion de chaînes de relations (21) et afficher la liste d'auditeurs à l'utilisateur; lorsqu'il y a un auditeur dans la liste d'auditeurss, afficher l'UIN et le micro blog récemment publié de l'auditeur à l'utilisateur; si il y a des auditeurs multiples dans la liste d'auditeurs, afficher les UINs des auditeurs multiples à l'utilisateur selon un ordre dans lequel les auditeurs multiples écoutent à l'utilisateur, dans lequel de nouveaux auditeurs sont étiquetés avec une nouvelle identification.

2. Dispositif client selon la revendication 1, dans lequel le module de gestion de chaînes de relations (21) est en outre configuré pour obtenir la liste d'auditeurs mémorisés par un serveur de chaînes de relations de micro blog après que l'utilisateur ouvre une session sur un serveur d'ouverture de session.

3. Dispositif client selon la revendication 1, comprenant en outre un module de gestion logique (24) ; dans lequel :
le module de gestion de liste d'auditeurs (23) est en outre configuré pour lorsque l'utilisateur a l'intention d'apprendre l'information détaillée d'un auditeur et déclenche une commande de fonction correspondant à l'auditeur, envoyer l'UIN de l'auditeur au module de gestion logique (24) et recevoir la totalité de l'information de l'auditeur provenant du module de gestion logique (24) et afficher la totalité de l'information de l'auditeur à l'utilisateur ; et
le module de gestion logique (24) est configuré pour obtenir l'information d'identification et le matériau individuel de l'auditeur conformément à l'UIN de l'auditeur envoyé par le module de gestion de liste d'auditeurs (23), grouper l'UIN de l'auditeur avec l'information d'identification et le matériau individuel de l'auditeur, obtenir la totalité de l'information de l'auditeur et fournir la totalité de l'information de l'auditeur au module de gestion de liste d'auditeurs (23).

4. Dispositif client selon la revendication 3, comprenant en outre un module de gestion de numéro d'identification (25) et un module de gestion de matériau (26) ; dans lequel :
le module de gestion de numéro d'identification (25) est configurée pour obtenir l'information d'identification de terre à partir d'un serveur d'ouverture de session après avoir reçu une instruction d'obtention du module de gestion logique (24) et envoyer l'information d'identification obtenue au module de gestion logique (24) ; et
le module de gestion de matériau (26) est configurée pour obtenir les matériaux individuels de l'auditeur à partir du serveur d'ouverture de session après avoir reçu une instruction d'obtention du module de gestion logique (24) et envoyer l'information d'identification obtenue au module de gestion logique (24).

5. Dispositif client selon une quelconque des revendications 1 à 4, comprenant en outre une commande de page correspondant à un auditeur, configuré pour, lorsque l'utilisateur a l'intention d'écouter l'auditeur, localiser la page visiteur de l'auditeur pour l'utilisateur.

6. Système de changement d'une chaîne de relations multiutilisateurs, comprenant un dispositif client (10/11) selon une quelconque des revendications 1 à 5 et un serveur de chaînes de relations de micro blog (13).

7. Procédé de changement d'une chaîne de relations multiutilisateurs, comprenant de :
recevoir (61), par un dispositif client, une signalisation de notification d'écoute provenant d'un serveur de chaînes de relations de micro blog, **caractérise en ce que** la signalisation de notification d'écoute contient un numéro d'identification unique (UIN) d'un nouvel auditeur ; et le procédé comprend en outre de :
obtenir (62), par le dispositif client, l'UIN du nouvel auditeur contenu dans la signalisation de notification d'écoute, ajouter l'UIN du nouvel auditeur dans une liste d'auditeurs, étiqueter l'UIN du nouvel auditeur avec une nouvelle identification d'auditeur "Nouveau" et notifier au module d'indication de chaînes de relations (22) que le nouvel auditeur écoute l'utilisateur; et
surveiller, par le dispositif client, un message de déclenchement pour apprendre une information détaillée du nouvel auditeur et afficher la liste d'auditeurs à l'utilisateur ;
lorsqu'il y a un auditeur dans la liste d'auditeurs, afficher, par le dispositif client, l'UIN et le micro blog récemment publié de l'auditeur à l'utilisateur ; si il y a des auditeurs multiples dans la liste d'auditeurs, afficher les UINs des auditeurs multiples à l'utilisateur selon un ordre dans lequel les auditeurs multiples écoutent l'utilisateur ,dans lequel de nouveaux auditeurs sont étiquetés avec une nouvelle identification d'auditeur.

8. Procédé selon la revendication 7, comprenant en outre de :
lorsque l'utilisateur a l'intention d'apprendre une information détaillée d'un auditeur et déclenche une commande de fonction correspondant à l'auditeur, obtenir, par le dispositif client, l'information d'identification et le matériau individuel de l'auditeur conformément à l'UIN de l'auditeur envoyé par le module de gestion de liste d'auditeurs (23), grouper l'UIN de l'auditeur avec l'information d'identification et le matériau individuel de l'auditeur, obtenir la totalité de l'information de l'auditeur afficher la totalité de l'information de l'auditeur à l'utilisateur.

9. Procédé selon une quelconque des revendications 7 à 8, comprenant en outre de :
lorsque l'utilisateur à l'intention d'écouter un auditeur, localiser la page visiteur de l'auditeur pour l'utilisateur.

10. Procédé selon la revendication 7, comprenant en outre de :
recevoir, par un serveur de chaînes de relations de micro blog, une signalisation de demande d'écoute d'un auditeur, obtenir les UINs de l'auditeur et l'utilisateur, ajouter l'auditeur dans la liste d'auditeurs de l'utilisateur et mémoriser la liste d'auditeurs.
